# EUROPEAN PATENT SPECIFICATION

(11) **EP 2 075 078 B1**
(45) Date of publication and mention of the grant of the patent: **16.07.2014**
(21) Application number: 08254097.2
(22) Date of filing: 22.12.2008
(51) Int. Cl.: B23D 47/02

(54) **Table saw**
Tischsäge
Scie à table

(30) Priority: 29.12.2007 CN 200710302603; 17.11.2008 CN 200810235927
(43) Date of publication of application: 01.07.2009
(73) Proprietor: Positec Power Tools (Suzhou) Co., Ltd., Suzhou 215006 (CN)
(72) Inventor: Brown, Warren, Mount Evelyn, Victoria 3796 (AU); Gerhardt, Graham, Warrandyte, Victoria 3133 (AU); Szommer, Harry, Carrum Downs, Victoria 3201 (AU); Chen, Guo-Jun, 215006 Suzhou (CN); Ji, Shao-Shan, 215006 Suzhou (CN)
(74) Representative: Stuttard, Garry Philip

(56) References cited:
- DE-A1- 3 842 963
- FR-A1- 2 828 431
- US-A- 4 640 326
- US-A1- 2003 221 530
- US-B1- 6 494 198

## Description

The present invention relates to a table saw according to the preamble of claim 1. Such a table saw is known from US 6,494,198 B1.

A conventional table saw comprises a stationary table, a circular blade rotatably mounted on the stationary table and an auxiliary support device movable relative to the stationary table. The auxiliary support device serves to extend the size of the stationary table and permits a larger workpiece to be readily supported on the working surface of the stationary table such that the workpiece can be conveniently moved past the saw blade and such that it is adequately supported for making accurate cuts.

US-4955941 discloses an auxiliary support device of a table saw which is releasably fastened to a principal table. When the table saw is in an operative and supportive position, the auxiliary support device may be positioned in any fashion relative to the principal table. When the table saw is in its collapsed mode for storage or transportation, the auxiliary support device is detached from the table saw and stored independently elsewhere.

US-A1-2005/0092155 discloses an auxiliary support device of a table saw which is movable between a first position where the auxiliary support device is extended into a work supporting position and a second position where the auxiliary support device is oriented into a stored position. The auxiliary support device is folded between the first and second position and supported in the first position via a brace.

US-A1-2007/0006703 discloses a table saw comprising a stationary table and a movable table movable linearly relative to the stationary table.

FR-2828431 discloses a table saw comprising a stationary worktable supported by a base from which is prominent a cutting device. An auxiliary support device adjacent to the worktable is convertible between an extended position and a folded position and is pivotal upwardly when converted from the extended position to the folded position.

US-A-6494198 discloses a stone cutter comprising a foldable plate for oblique cutting and a pair of rulers on either side of the cutting station.

Prior worktable side extensions may be secured to a worktable by means of a plurality of fastener screws or bolts. The resulting structure is very complex and it is difficult to assemble the side extensions to the worktable or detach the side extensions from the worktable. In addition, the structure utilises a large space when not in use and is inconvenient to store or transport.

Other prior worktable side extensions may be movable between the supporting position and stored position. For example, where the extensions are retractable, the apparatus becomes more compact and easier to move. For example, if the extensions are foldable towards the base of the table saw, the length of the extensions does not exceed the limits of the height of the table saw otherwise the extensions will take up more space or be inconvenient to store.

The present invention seeks to provide adequate support for making accurate cuts in a table saw which is convenient to store or transport.

Viewed from a first aspect the present invention provides table saw comprising: a stationary worktable having a work surface; a base for supporting the worktable; a motor-driven cutting device mounted between the worktable and base so as to be operatively prominent from the work surface; and at least one auxiliary support device adjacently mounted pivotally relative to the worktable, wherein the auxiliary support device is convertible between an extended position and a folded position and is pivotal upwardly when converted from the extended position to the folded position, wherein when the auxiliary support device is pivoted to the extended position the support length of the auxiliary support device adds to the support length of the worktable and wherein the auxiliary support device defines an upper support surface substantially parallel to the work surface in the folded position and a scale system for measuring the cutting length of a workpiece, wherein the scale system has a first measurement scale located on the worktable at one side of the cutting device and a second measurement scale located on the auxiliary support device at the other side of the cutting device, wherein when the auxiliary support device is in the extended position the second measurement scale is sequential for measuring a workpiece supported on the auxiliary support device.

The configuration of the table saw according to the present invention is very simple and its manufacture is low cost.

Preferably the auxiliary support device defines an upper support surface substantially parallel to the work surface in the extended position.

Preferably the auxiliary support device is a framework which comprises a first rod, a second rod and a third rod connected between the first rod and the second rod.

Preferably the auxiliary support device has a support length L2 which is larger than the height H between the work surface and bottom of the base.

Preferably the worktable has a support length L1 greater than the support length L2 of the auxiliary support device.

In a preferred embodiment, the table saw further comprises a pair of brackets disposed on opposite edges of the worktable, wherein each bracket has a support surface for supporting the auxiliary support device.

Preferably the table saw further comprises a detachable support plate with a support surface which is disposed on the auxiliary support device, wherein the support surface of the support plate is substantially co-planar with the work surface of the worktable.

The scale system may be printed or sculpted on the upper surface of the first support and the first guide rod and the scale system also can be calibrated to any scale such as the English or metric system. In particular, the present invention relates to a table saw having a scale device that can facilitate a user reading the cutting length of a wooden workpiece directly and precisely.

When the auxiliary support device is pivoted to the extended position to support a wooden workpiece having a longer cutting length, the user can read the values of the scale system so as to obtain the cutting length of the wooden workpiece directly. The values of the scale system indicate the longer cutting length of the workpiece precisely thereby enhancing the work efficiency of the table saw.

Preferably the worktable has a stationary support equipped with a pair of guide rails and the auxiliary support device is equipped with a pair of guide rods, wherein the scale system has a dual scale disposed on one of the guide rails and series scale values disposed on one of the guide rods, wherein the dual scale is aligned with the series scale values.

The scale system may comprise a scale tape with a first end fixed to the first guide rail and a second end which is movable with respect to the first guide rod. Alternatively the first end of the scale tape may be movable with respect to the first guide rail and the second end of the scale tape may be fixed with respect to the first guide rod. The scale system may further comprise an elastic member (eg spring) mounted either between the second end of the scale tape and the end of the first guide rod or between the first end of the scale tape and the first guide rail.

The scale system may comprise a first scale ruler fixed to the first guide rail and a second scale ruler movable with respect to the first guide rod. Alternatively the first scale ruler is movable with respect to the first guide rail and the second scale ruler is fixed with respect to the first guide rod.The scale system may further comprise an elastic member (*eg* spring) mounted between the second scale ruler and the first guide rod.

Preferably the table saw further comprises a movable rip fence selectively mounted on the stationary support or the auxiliary support and a scale indication pointer disposed on the rip fence.

In a preferred embodiment the table saw further comprises a safety device mounted between the stationary support and the auxiliary support.

Preferably the auxiliary support is equipped with a pair of guide rods and a third rod which define a first support surface and a second support surface respectively, wherein the first support surface and the second support surface can be converted to work in accordance with the extended position and folded position of the auxiliary support.

Preferably the first support surface and the second surface are each provided with a scale system, wherein at least one scale system is provided with series scale values.

Preferably the first support surface is the upper surface of the auxiliary support and the second support surface is the bottom surface of the auxiliary support, wherein when the auxiliary support is in the extended position, the first support surface is adjacent the work surface and when the auxiliary support is in the folded position, the second surface is adjacent to the work surface.

Preferably the first support surface and the second support surface are lower than the work surface.

In a preferred embodiment, the table saw further comprises at least one locking device mounted operatively between the guide rods and workable for locking the auxiliary support relative to the worktable.

The present invention will now be described in a non-limitative sense with reference to the accompanying Figures in which common reference numerals represent corresponding parts throughout:
FIGURE 1 is a perspective side view of a table saw according to a first embodiment of the present invention;
FIGURE 2 is a plane view of the table saw shown in FIGURE 1;
FIGURE 3 is a partial enlarged view of the table saw shown in FIGURE 2 which shows two zero scales of a guage;
FIGURE 4 is a partial enlarged view of the table saw shown in FIGURE 2 which shows the connection of the scales respectively disposed on a first support and a second support;
FIGURE 5 is a partial enlarged view of the table saw shown in FIGURE 2 which shows a pointer disposed on a fence;
FIGURE 6 is a front view of the first embodiment of the present invention which shows the first support in a work position;
FIGURE 7 is a perspective side view of the first embodiment of the present invention which shows the first support in a folded position;
FIGURE 8 is a partial enlarged view of the table saw shown in FIGURE 7;
FIGURE 9 is a perspective side view of the first embodiment of the present invention which shows the first support pivoted to the folded position from the work position;
FIGURE 10 is a perspective side view of a table saw according to a second embodiment of the present invention;
FIGURE 11 is a partial enlarged view of E indicated in FIGURE 10;
FIGURE 12 is a partial enlarged view of F indicated in FIGURE 10;
FIGURE 13 is an enlarged cross-sectional view take alone line G-G in FIGURE 10;
FIGURE 14 is a perspective side view of a table saw according to a third embodiment of the present invention;
FIGURE 15 is a partial enlarged view of H indicated in FIGURE 14;
FIGURE 16 is a partial enlarged view of I indicated in FIGURE 14;
FIGURE 17 is an enlarged cross-sectional view take alone line J-J in FIGURE 14;
FIGURE 18 is a perspective side view of a table saw according to a fourth embodiment of the present invention which shows an auxiliary support device pivotal with respect to the table saw;
FIGURE 19 is a perspective side view of the table saw shown in FIGURE 18 which shows the auxiliary support device in a first work position;
FIGURE 20 is an enlarged cross-sectional view take alone line K-K in FIGURE 19;
FIGURE 21 is a perspective side view of the table saw shown in FIGURE 19 which shows the auxiliary support device ready to pivot;
FIGURE 22 is an enlarged cross-sectional view take along line L-L in FIGURE 21; and
FIGURE 23 is a perspective side view of the table saw shown in FIGURE 18 which shows the auxiliary support device in a second work position.

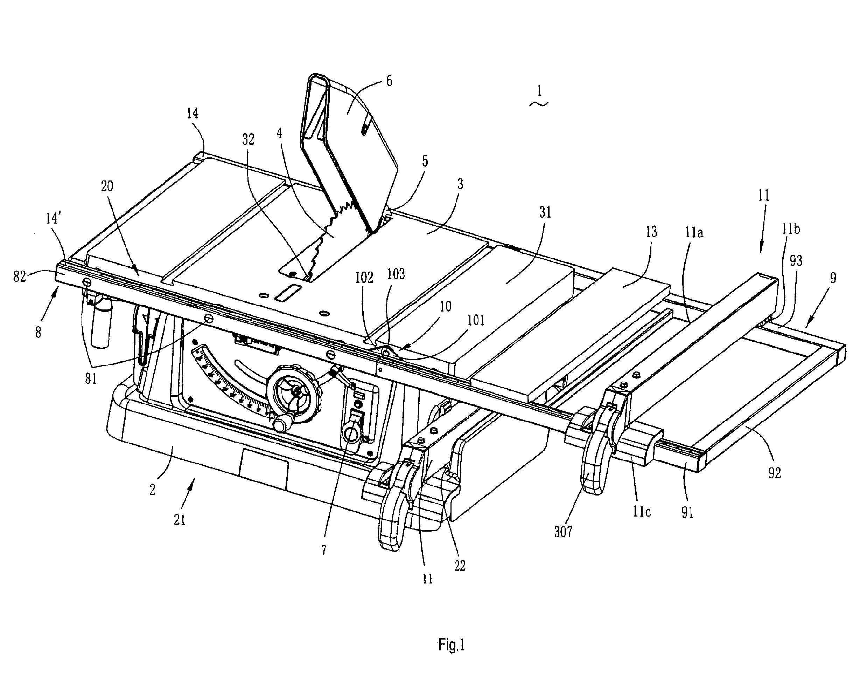

Referring to Figure 1, a table saw 1 according to a first embodiment of the invention comprises a base 2 having a receiving cavity 21. A circular cutting blade 4 is mounted within the receiving cavity 21 and is driven by a motor (not shown). A storage cavity 22 is formed at an upper periphery of the base 2 and a substantially rectangular stationary worktable 3 is disposed on and supported by the base 2. The worktable 3 has a planar upper work surface 31 for supporting a workpiece. The upper work surface 31 includes a transverse cutting slot 32 through which the cutting blade 4 partially extends for cutting. The cutting blade 4 is used to cut a material such as wood that is pushed laterally along the upper work surface 31.

A riving knife 5 is disposed behind the cutting blade 4 and operated as a splitter to prevent two cut workpiece parts from closing on one another. A blade guard 6 at least partially encloses the blade 4 and pivotally associates with the riving knife 5 to keep the cutting blade 4 non-exposed when the blade 4 is in a cutting position or a non-cutting position to ensure operator safety. A trigger device 7 under the work table 3 is mounted at one side of the base 2 and is switched straightforwardly by an operator. The table saw 1 further comprises a stationary support 8 which is equipped with a pair of spaced apart guide rails 14, 14' at opposite edges of the worktable 3. The first guide rail 14' is located at the edge closest to the operator and the second guide rail 14 is at the opposite edge remote from the operator. The pair of guide rails 14, 14' is fastened to the work table 3 by screws 81.

An auxiliary support 9 is connected pivotally to the worktable 3 via a pair of gemel devices 10 (only one shown) such that the auxiliary support 9 can be pivoted between an extended position and a folded position. Each gemel device 10 includes a first join unit 101 fixed on the auxiliary support 9, a second join unit 102 fixed to the worktable 3 and an axis 103 disposed on the worktable 3. Each guide rail 14, 14' comprises an elongate body 82 with a square cross-section. The auxiliary support 9 is a framework which is substantially U-shaped and includes a first guide rod 91, a second guide rod 93 parallel to the first guide rod 91 and a connecting rod 92 connected between the first guide rod 91 and the second guide rod 93. Each of the first guide rod 91, second guide rod 93 and connecting rod 92 has an upper surface which together define an upper support surface substantially parallel with the work surface 31 when the auxiliary support 9 is in the extended position or in the folded position.

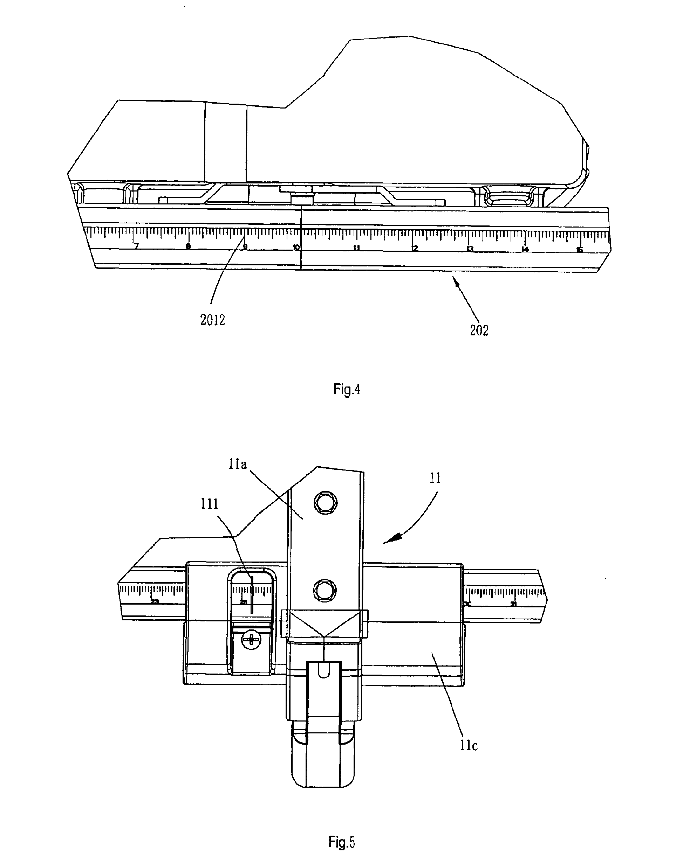

A rip fence 11 is movable relative to the worktable 3 and includes a fence body 11 a slidably mounted on the worktable 3. A first connecting seat 11b and a second connecting seat 11c are respectively formed on opposite ends of the fence body 11 a. The second connecting seat 11c includes a viewing window which is formed of transparent material and a scale indication pointer 111 disposed on the viewing window (as shown in Figure 5). A locking device 307 is pivotally mounted on the second connecting seat 11c for locking and unlocking the rip fence 11. The pair of guide rails 14, 14' can be used to guide the rip fence 11 as the rip fence 11 slides on the worktable 3 and this arrangement is suitable for short or wide cuts. When the rip fence 11 is unlocked, it can be selected to mount the auxiliary support 9. The first guide rod 91 and the second guide rod 93 can be used to guide the rip fence 11 as the rip fence 11 slides on the auxiliary support 9 and this arrangement is suitable for long cuts. When cutting is over, the rip fence 11 is detached and held in the storage cavity 22 (shown with broken lines).

The pair of guide rails 14', 14 and the pair of guide rods 91, 93 are hollow-shaped such that the weight of the table saw is minimised. A detachable support plate 13 provided with an upper support surface is attached to the guide rods 91, 93 for supporting a longer workpiece. The support plate 13 is unnecessary when a short workpiece is to be cut so it can be detached from the guide rods 91, 93 and held in the storage cavity 22.

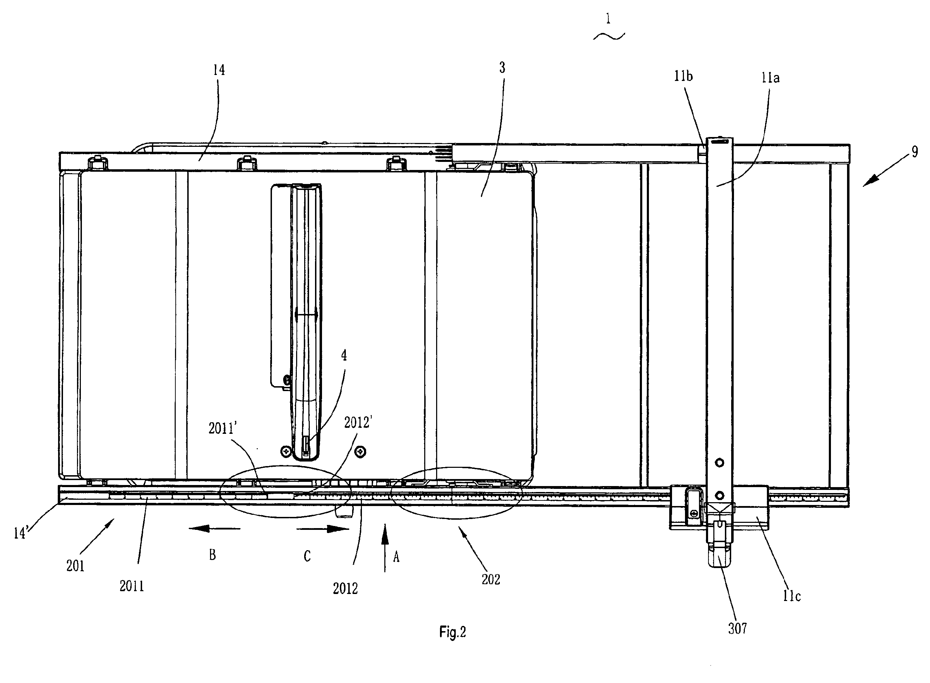

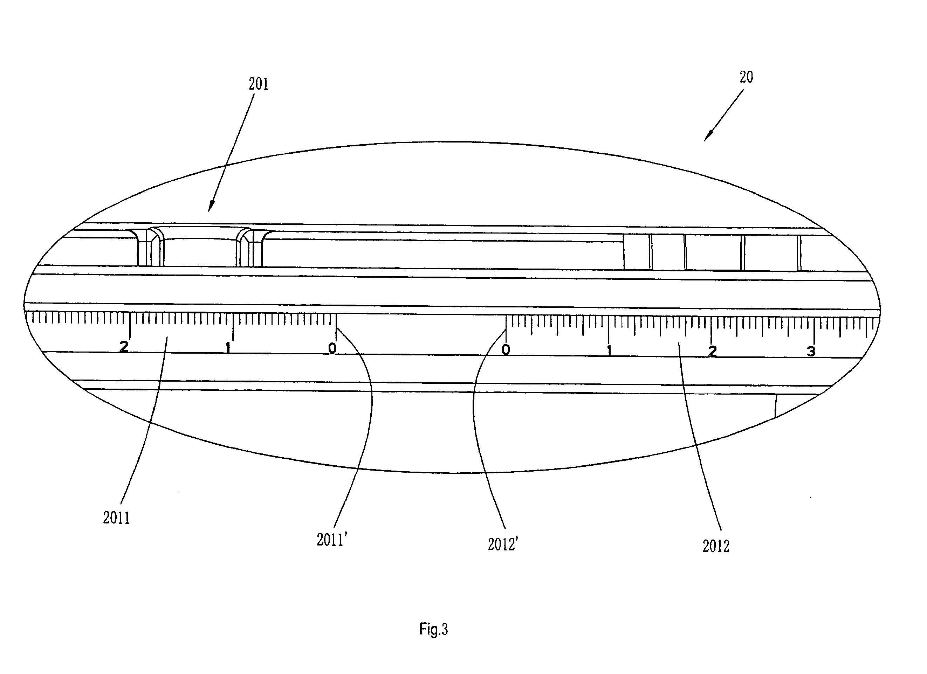

As shown in Figures 2 to 5, the table saw 1 further includes a scale system 20 for indicating the cutting length of the workpiece. According to the invention the scale system 20 comprises a dual scale, namely a first measurement scale 201 and a second measurement scale 202. The first guide rail 14' of the stationary support 8 has a first end equipped with a first scale zone 2011 and a second end equipped with a second scale zone 2012. Each of the first scale zone 2011 and the second scale zone 2012 has a plurality of markings whose values increase outwardly and include a first zero 2011' of the first measurement scale 201 and a second zero 2012' of the second measurement scale 202. In direction B, the first measurement scale 201 includes a series scale 0.1.2.3.4.5. In direction C, the second measurement scale 202 includes a first series scale 0.1.2.3.4.5...10 formed on the first guide rail 14' and a second series scale 11.12.13.14.15...... formed on the first guide rod 91. Each scale value of the second measurement scale 202 respectively formed on the stationary support 8 and the first guide rod 91 is exclusive and non-repetitive. Thus according to the invention the second measurement scale 202 is a sequential measurement device which is suitable for measuring a longer workpiece.

Referring to Figures 2 and 5, when it is desired to cut a longer workpiece, the rip fence 11 slides on the guide rods 91, 93 of the auxiliary support 9 until the scale indication pointer 111 is aligned to a desired scale value of the second measurement scale 202. The rip fence 11 is then secured in position. The desired scale value indicates the distance from the cutting blade 4 to one side of the fence body 11 a close to the cutting blade 4. The workpiece can be pushed against the side of the rip fence 11 a and along the upper work surface 31 of worktable 3 while it is being cut by the cutting blade 4.

When it is desired to cut a shorter workpiece, the rip fence 11 is placed on either the right or left side of the cutting blade 4 and is secured a predetermined distance away from the cutting blade 4. Viewed in direction A, when the rip fence 11 is mounted on the left side of the cutting blade 4, the workpiece is against the right side of the fence body 11 a along the upper work surface 31 whilst it is cut by the cutting blade 4. Alternatively, when the rip fence 11 is mounted on the right side of the cutting blade 4, the workpiece is against the left side of the fence body 11a along the upper work surface 31 whilst it is cut by the cutting blade 4. The first zero 2011' of the first measurement scale 201 and the second zero 2012' of the second measurement scale 202 are respectively disposed on the upper surface of the first guide rail 14' where the scale indication pointer 111 is positioned when the rip fence 11 is immediately adjacent the cutting blade 4. Each zero 2011', 2012' is therefore aligned relative to the cutting blade 4 but not necessarily in the position on the scale aligned with the cutting blade 4. The last scale value on each side of the cutting blade 4 is such that the scale indication pointer 111 on the rip fence 11 reads the maximum distance from the cutting blade 4 when the rip fence 11 is in its furthest position.

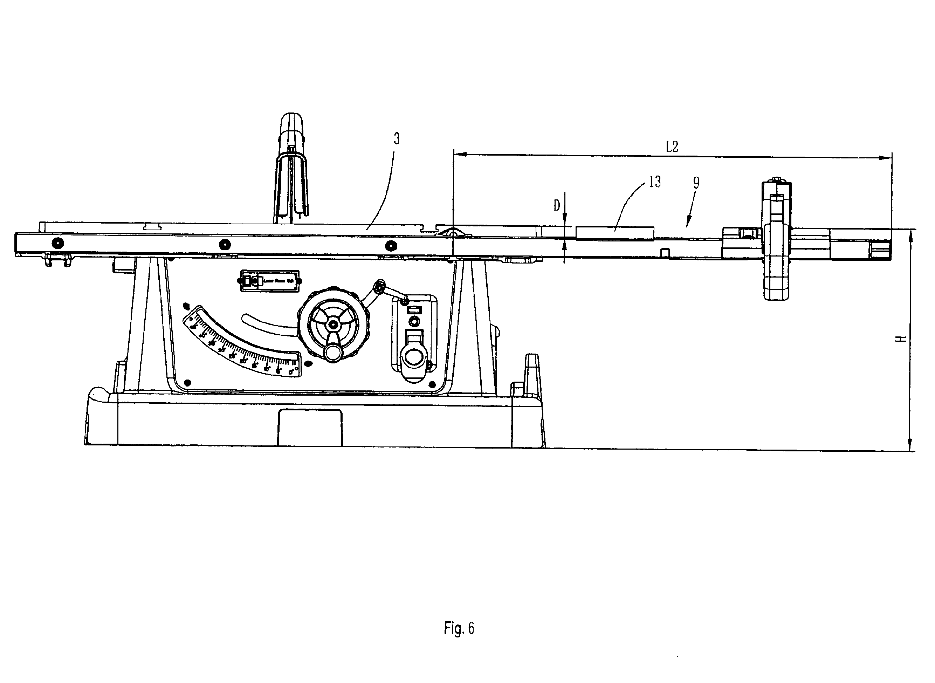

Referring to Figures 2 and 6, the auxiliary support 9 is held in its extended position and fixed with respect to the worktable 3 during the cutting operation. The second measurement scale 202 of the guide rod 91 is fixed with respect to the auxiliary support 9. The first measurement scale 201 of the guide rail 14 is aligned with the second measurement scale 202 of the guide rod 91. The scale system 20 is linear and designed so that the operator can read the scale value directly according to the scale indication pointer 111.

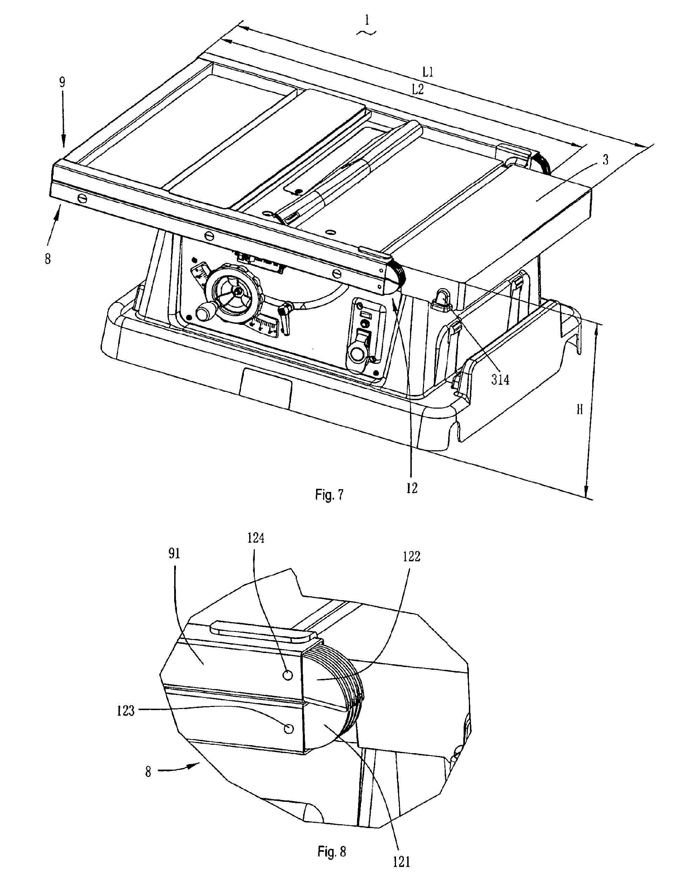

As shown in Figure 6, the length L2 of the auxiliary support 9 in its extended position exceeds the height H from the work surface 31 to the bottom of the base 2. When the auxiliary support 9 is pivoted to the folded position (see Figure 7), the length L2 of the auxiliary support 9 is within the scope of the length L1 of the worktable 3 such that the auxiliary support 9 will not take additional space in package or transport. However, when the auxiliary support 9 is pivoted to the extended position, the added support length of the auxiliary support 9 and scale system 20 helps the operator to make longer cuts accurately. The upper support surface of the auxiliary support 9 is lower than the work surface 31 and there is a distance D between them. The upper surface of the support plate 13 is coplanar with the work surface 31.

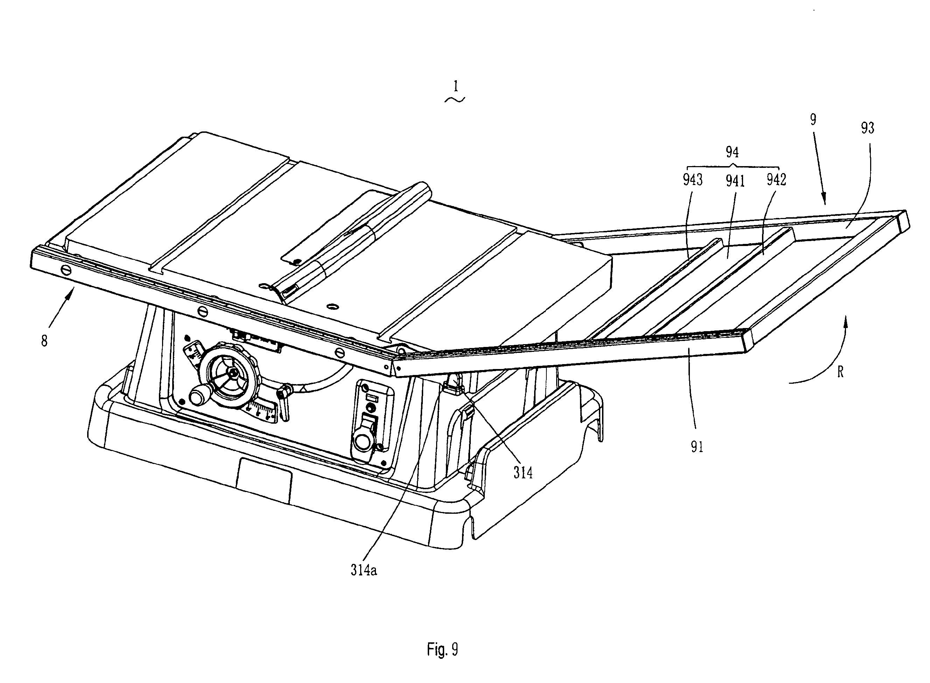

As shown in Figures 7 and 8, a safety device 12 is mounted between the stationary support 8 and the auxiliary support 9. The safety device 12 comprises a first guard 121 connected to the first guide rail 14 via a screw 123 and a second guard 122 connected to the first guide rod 91 via a screw 124. Each of the first guard 121 and second guard 122 comprises a plurality of metal plates which are spaced apart from each other and substantially semi-circular. The metal plates of the first guard 121 cross the metal plates of the second guard 122 whenever the auxiliary support 9 is in the extended or folded position such that the safety device 12 protects the fingers of the operator from injury. Referring to Figure 9, when the auxiliary support 9 is pivoted upwardly around the axis 103 (direction R) from the extended position to the folded position, the second guard 122 is pivoted together with the auxiliary support 9 relative to the worktable 3.

As shown in Figure 9, a pair of brackets 314 is respectively disposed on opposite sides of the table saw 1 (only one is shown). Each bracket 314 is provided with a support surface 314a for supporting the bottom of the first guide rod 91 and the second guide rod 93. The auxiliary support 9 comprises a tool box 94 mounted between the two guide rods 91, 93 for retaining accessories such as a ruler or a screwdriver during cutting. The tool box 94 has a first side wall 942, a second side wall 943 and a base 941 which are respectively welded between the two guide rods 91, 93. Each upper surface of the first side wall 942 and the second side wall 943 is lower than the upper surface of the guide rods 91, 93 such that the upper surface of the guide rods 91, 93 can lie on the upper surface of the guide rails 14 when the auxiliary support 9 is in the folded position.

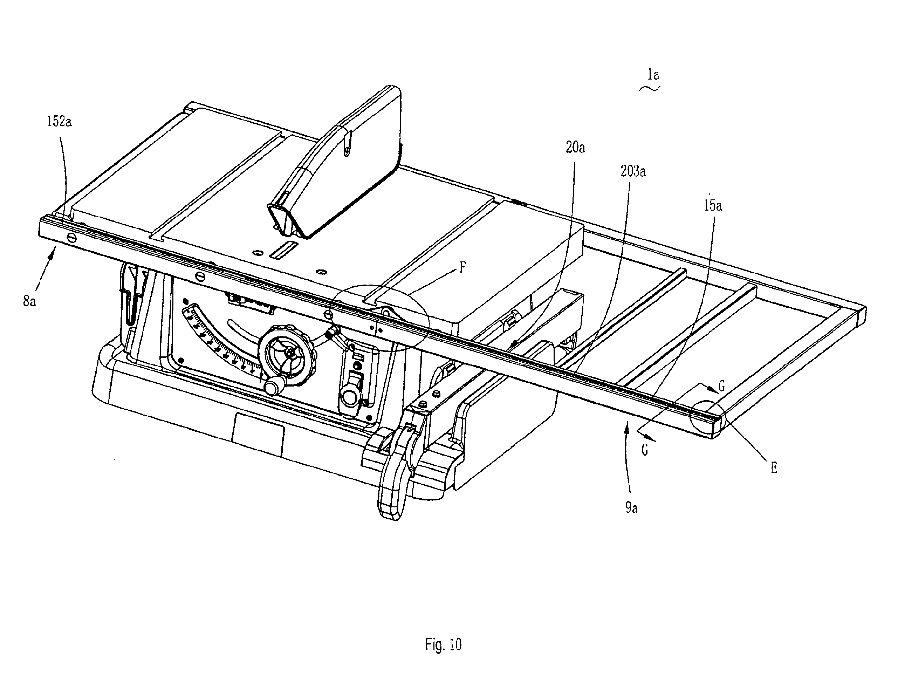

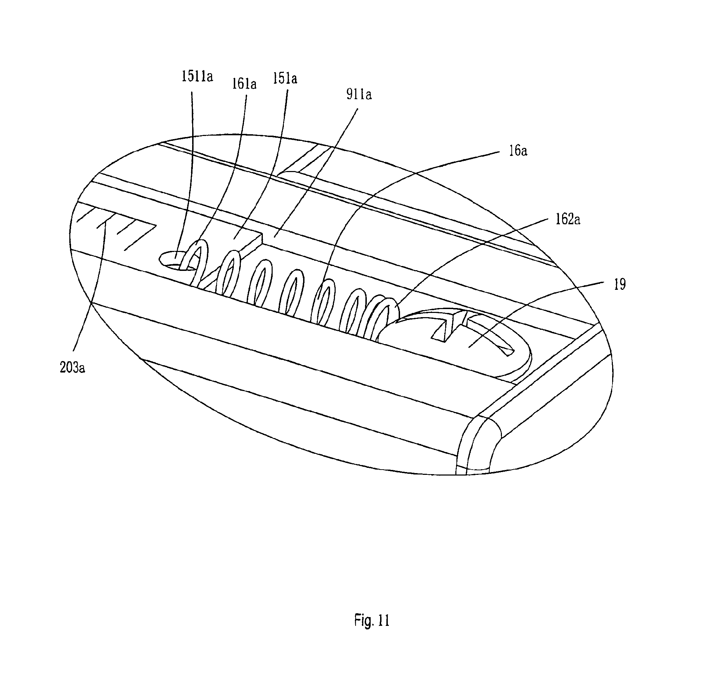

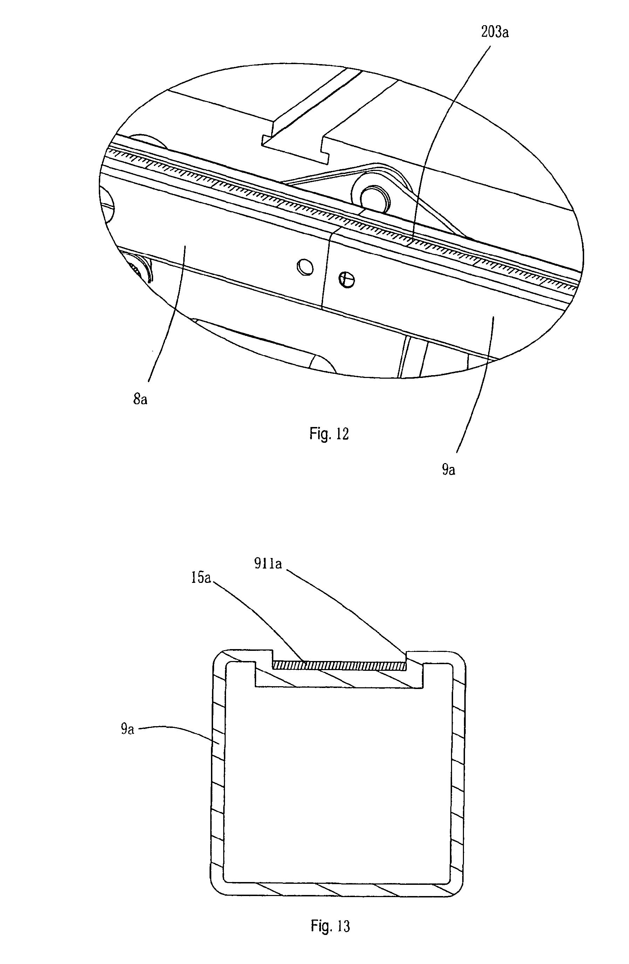

Figures 10-13 illustrate a second embodiment of the present invention. The primary difference between the first embodiment and the second embodiment is the scale system. Wherever possible the numerals used in respect of the description of the first embodiment hereinbefore have been retained for like components in the description hereinafter. The scale system 20a comprises a scale tape 15a with a first end 152a fixed to the first guide rail of the stationary support 8a and a second end 151a which is movable with respect to the first guide rod of the auxiliary support 9a. A smooth groove 911a is formed on the upper surface of the first guide rail and the first guide rod for receiving the scale tape 15a. As illustrated in Figure 11, a spring 16a is disposed between the second end 151a of the scale tape 15a and the end of the first guide rod. The spring 16a has a first end 161 a hooked into a hole 1511 a which is formed on the scale tape 15a and a second end 162a connected to the end of the first guide rod via a screw 19. The scale value of the scale tape 15a is similar to the dual scale of the first embodiment and the second measurement scale of the scale tape 15a is sequential. When the first guide rod is in the extended position, the scale tape 15a is tensioned by the spring 16a such that an accurate measurement can be made according to the scale value of scale tape 15a whenever a clearance exists between the first guide rod and first guide rail. The scale tape 15a is made of soft material so as to be foldable together with the first guide rod when the auxiliary support 9a pivots to its folded position.

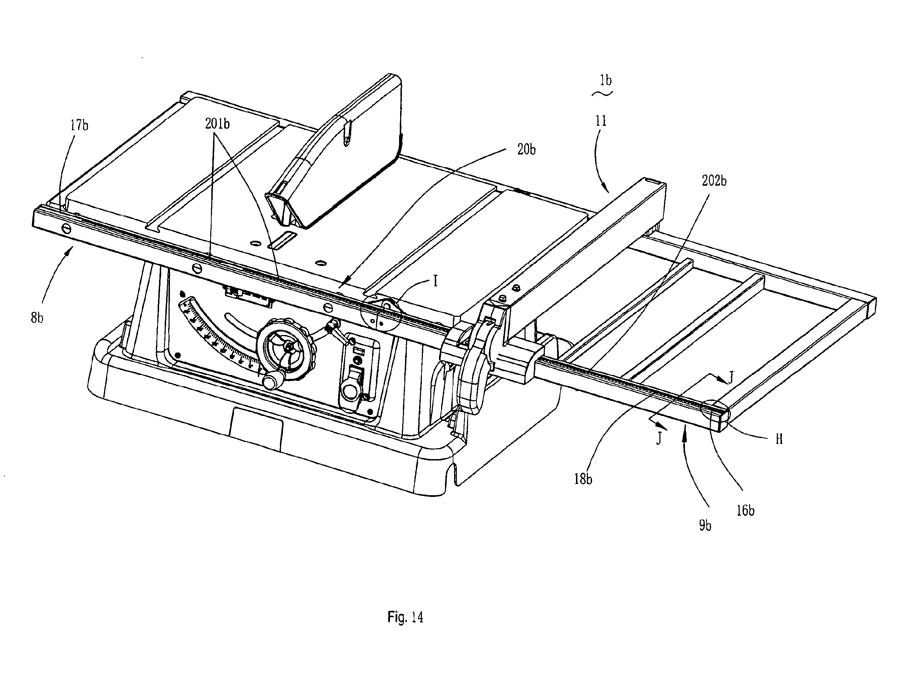

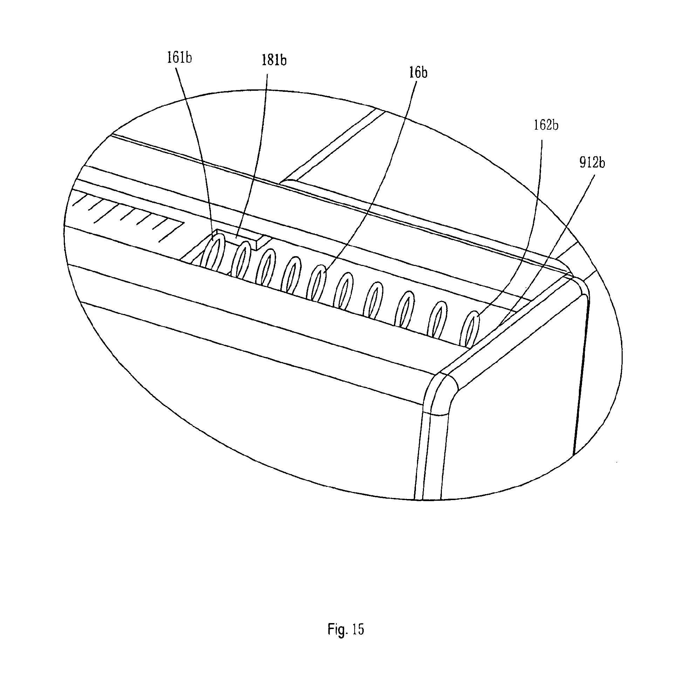

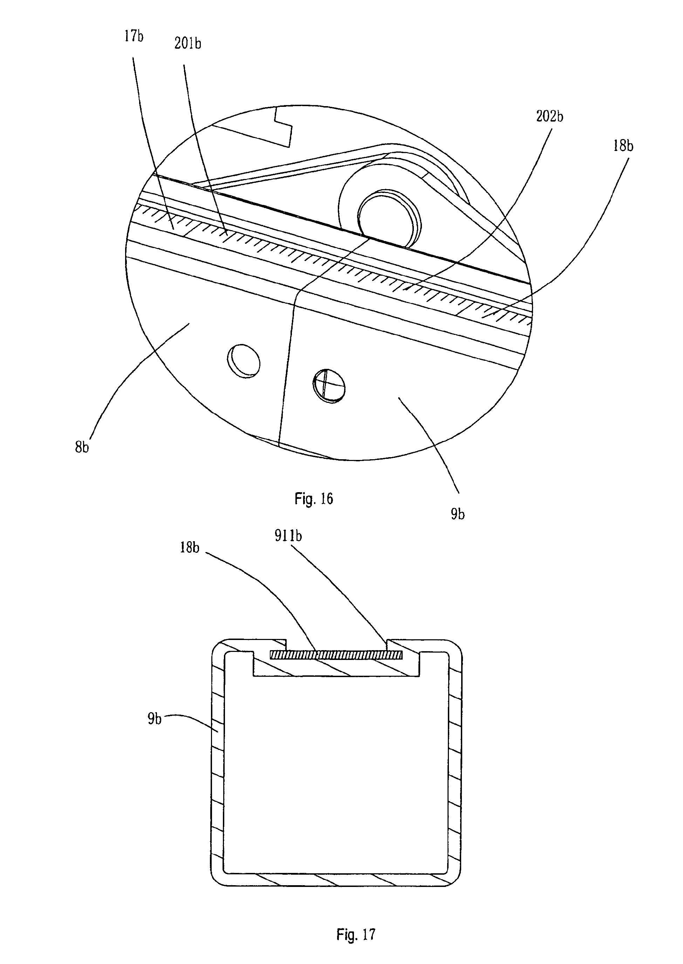

Figures 14 to 17 show a third embodiment of the present invention. The primary difference between the first embodiment and the third embodiment is the scale system. Wherever possible the numerals used in respect of the description of the first embodiment hereinbefore have been retained for like components in the description hereinafter. The scale system 20b comprises a first scale ruler 17b fixed to the first guide rail of the stationary support 8b and a second scale ruler 18b movable with respect to the first guide rod of the auxiliary support 9b. A smooth groove 911b is formed on the upper surface of the first guide rail and first guide rod for retaining the first scale ruler 17b and the second scale ruler 18b. As illustrated in Figure 15, a spring 16b is mounted between the second scale ruler 18b and the first guide rod. The spring 16b has a first end leaning against one end of the second scale ruler 18b and a second end leaning against the end wall of the groove 911b of the first guide rod. The scale value of the scale ruler 17b, 18b is similar to the dual scale of the first embodiment. The first measurement scale is disposed on the first scale ruler 17b whilst partial scale values of the second measurement scale are disposed on the first scale ruler 17b and others disposed on the second scale ruler 18b. When the first guide rod is in the extended position, the second scale ruler 18b is pushed by the spring 16b to touch the first scale ruler 17b such that an accurate measurement can be made according to the scale value of scale system 20b whenever a clearance exists between the first guide rod and first guide rail.

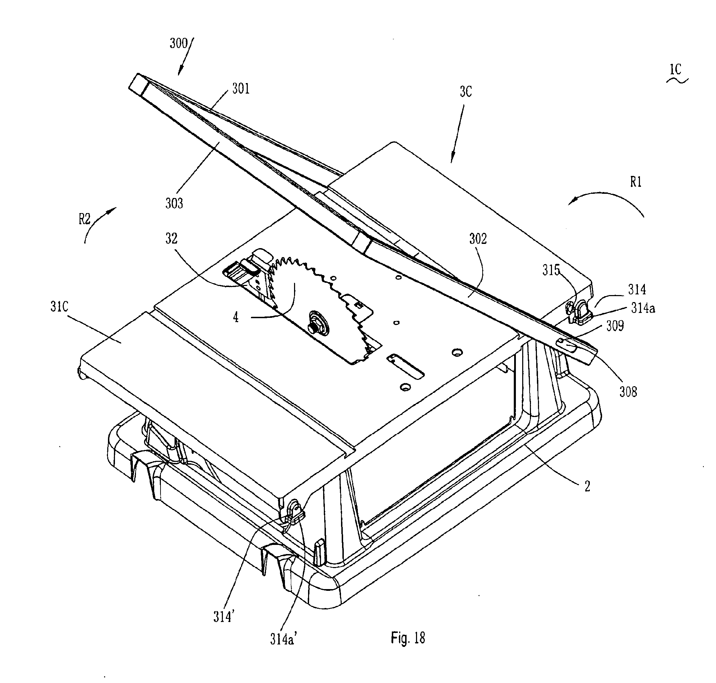

Figure 18 shows a fourth embodiment of the present invention which is similar to the aforementioned embodiments. The worktable 3c has a planar upper work surface 31c for supporting a workpiece which includes a cutting slot 32 through which the cutting blade 4 partially extends for cutting the workpiece. The table saw 1c comprises an auxiliary support 300 which is a substantially U-shaped framework which includes a pair of parallel guide rods 301, 302 respectively located at opposite edges of the worktable 3c and a connecting rod 303 connected between the first guide rod 301 and the second guide rod 302. Each of the first guide rod 301, second guide rod 302 and the connecting rod 303 has an upper surface which together define a first support surface and has a bottom surface which together define a second support surface. The first support surface and the second support surface are respectively parallel to the work surface 31c when the auxiliary support 300 is in the extended position or in the folded position. Each of the first guide rod 301 and the second guide rod 302 has a first end and a second end. A longitudinal opening 308 (only one is shown) is disposed adjacent the second end remote from the connecting rod 303 and is provided with a left end and a right end. A spindle 309 is mounted in the longitudinal opening 308 such that the auxiliary support 300 can pivot relative to the spindle 309 in direction R1 to the folded position or pivot relative to the spindle 309 in direction R2 to the extended position. A pair of brackets 314, 314' is respectively disposed on opposite edges of the worktable 3c. Each bracket 314, 314' is provided with a support surface 314a, 314a' for selectively supporting the upper surface or the bottom surface of the first guide rod 301. In addition, a locking device 315 is mounted between the second guide rod 302 and worktable 3c for locking the position of the auxiliary support 300.

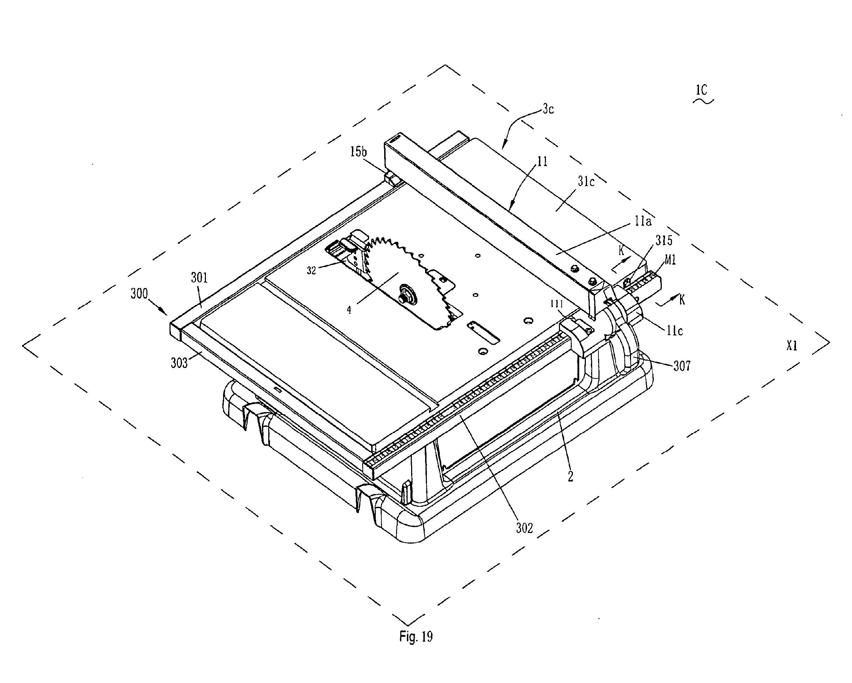

As shown in Figure 19, when the auxiliary support 300 is in the folded position, the base of the first guide rod 301 and the second guide rod 302 are supported on the brackets 314, 314'. The U-shaped framework is just outside the worktable 3c but the length of the auxiliary support 300 is still within the scope of the length of the base 2 such that the auxiliary support 300 will not take additional space in package or transport. The spindle 309 is in the longitudinal opening 308 against the left end and the locking device 315 secures the position of the auxiliary support 300 relative to the worktable 3c. The first support surface defined by the first guide rod 301 and the second guide rod 302 and the connecting rod 303 is in a first work plane X1 which is parallel to and lower than the work surface 31 c. The fence body 11a of the movable rip fence 11 rides on the work surface 31 c and the two connecting seats 11b, 11c are respectively secured on the guide rods 301, 302. The locking device 307 is pivotal to lock or unlock the rip fence 11. A first scale system M1 is disposed on the upper surface of the second guide rod 302. The first scale system M1 comprises a dual scale, namely a first measurement scale located at the left side of the cutting blade 4 and a second measurement scale approximately located at the right side of the cutting blade 4. Each measurement scale has a plurality of markings whose values are gradually increased from a mediate portion of the second guide rod 302 to two ends of the second guide rod 302. Thus the operator can make cuts at the left side of the blade 4 or at the right side of the blade 4 according to the position of the rip fence 11. The scale indication pointer 111 of the transparent viewing window of the second connecting seat 11c indicates the cutting length of the workpiece from the blade 4 to one side of the fence body 11a. The workpiece can be pushed against the side of the rip fence 11 a and along the upper work surface 31 c of worktable 3c while it is being cut by the cutting blade 4.

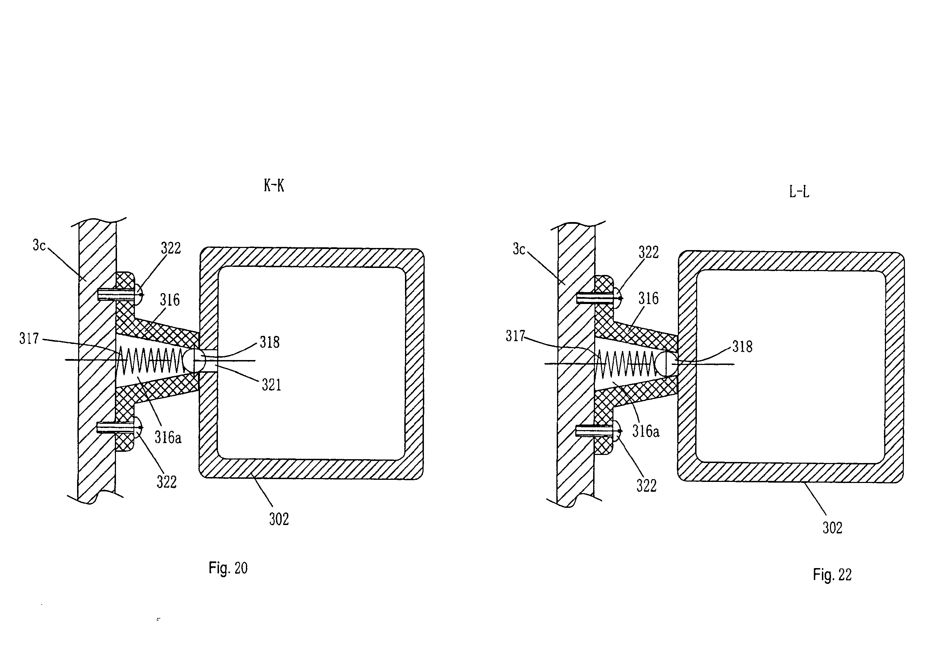

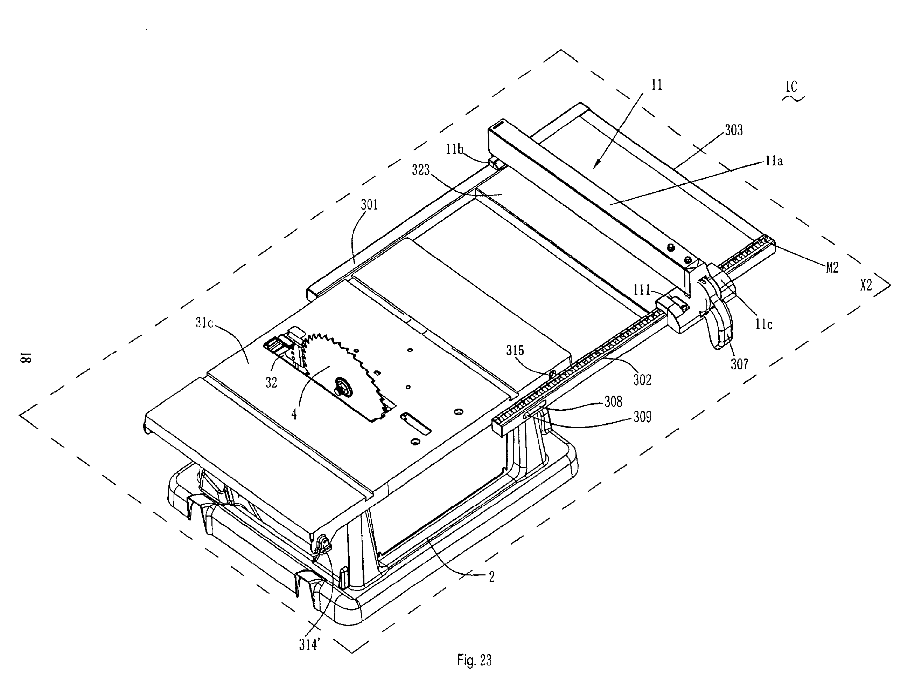

As shown in Figures 18 to 20, the locking device 315 comprises a locking pole 316, a chamber 316a disposed in the locking pole 316, a spring 317 and a steel ball 318 at least partially received in the chamber 316a. The spring 317 is connected to the steel ball 318 flexibly. The locking pole 316 is fastened to the worktable 3c via screws 322 and is adjacent to the end of the second guide rod 302 away from the connecting rod 303. The second guide rod 302 has two lockholes 321 (only one is shown in Figure 20) disposed on the inner side. The steel ball 318 of the locking pole 316 can be selected to engage the lockholes 321. When the steel ball 318 engages the first lockhole 321 of the second guide rod 302, the auxiliary support 300 is locked in the folded position. When the steel ball 318 engages the second lockhole 321 of the second guide rod 302, the auxiliary support 300 is locked in the extended position (see Figure 23). Referring to Figure 19, the auxiliary support 300 is located in the first work plane X1 and the steel ball 318 of the locking pole 316 engages the first lockhole 321 of the second guide rod 302.

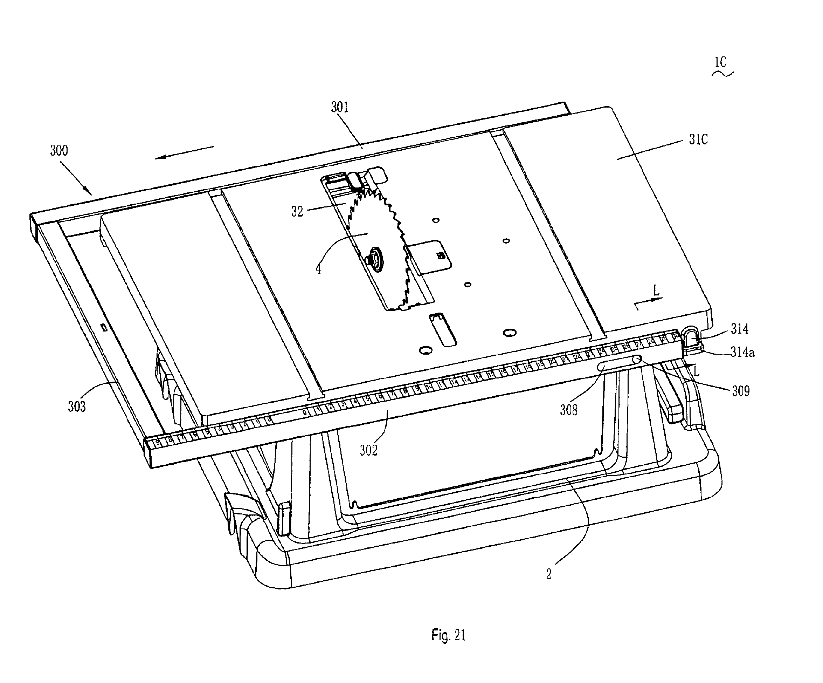

As shown in Figures 21 and 22, an outside force acts on the auxiliary support 300 firstly to pull the auxiliary support 300 away from the bracket 314 for a distance to avoid interference. The steel ball 318 disengages the first lockhole 321 and the spindle 309 is moved to depend on the right end of the longitudinal opening 308 such that the auxiliary support 300 can pivot around the spindle 309 in direction R2 from the folded position to the extended position.

As shown in Figure 23, when the auxiliary support 300 is pivoted to the extended position, the steel ball 318 of the locking device 315 engages the second lockhole 321 of the second guide rod 302. The auxiliary support 300 is locked in its extended position and the upper surfaces of the guide rods 301, 302 are supported on the brackets 314. The second support surface defined by the guide rods 301, 302 lies in the second work plane X2 which is parallel to and lower than the work surface 31 c. The first work plane X1 and the second work plane X2 are co-planar. The rip fence 11 is slidably mounted on the first guide rod 301 and the second guide rod 302. A second scale system M2 disposed on the upper surface of the second guide rod 302 comprises a serial measurement scale composed of a plurality of markings whose values are gradually increased from the second end adjacent the spindle 309 to the first end of the second guide rod 92. The first scale value of the second end of the second guide rod 92 is not a zero scale. The first value is disposed according to the practical distance from the cutting blade 4 to the second end of the second guide rod 92 such that the operator can make longer cuts according to the serial measurement scale. If necessary, a support plate 323 is provided with a support surface parallel to the work surface 31 c and can be disposed detachably between the first guide rod 301 and the second guide rod 302 for supporting a longer workpiece.

When cutting is over, the operator detaches the rip fence 11 from the guide rods 301, 302 and pivots the auxiliary support 300 upwardly around the spindle 309 from the extended position to the stored position in direction R1 in Figure 18. The table saw 1c becomes more compact and easier to move from work site to site.

## Claims

1. A table saw (1, 1c) comprising:
a stationary worktable (3, 3c) having a work surface (31, 31c);
a base (2) for supporting the worktable;
a motor-driven cutting device (4) mounted between the worktable and base so as to be operatively prominent from the work surface; and
at least one auxiliary support device (9, 300) adjacently mounted pivotally relative to the worktable, wherein the auxiliary support device is convertible between an extended position and a folded position and is pivotal upwardly when converted from the extended position to the folded position, wherein when the auxiliary support device is pivoted to the extended position the support length of the auxiliary support device adds to the support length of the worktable and wherein the auxiliary support device defines an upper support surface substantially parallel to the work surface in the folded position, **characterised in that** the table saw further comprises
a scale system (20) for measuring the cutting length of a workpiece, wherein the scale system has a first measurement scale (201, M1) located on the worktable at one side of the cutting device and a second measurement scale (202, M2) located on the auxiliary support device at the other side of the cutting device, wherein when the auxiliary support device is in the extended position the second measurement scale is sequential for measuring a workpiece supported on the auxiliary support device.

2. A table saw as claimed in claim 1 wherein the auxiliary support device (9, 300) defines an upper support surface substantially parallel to the work surface (31, 31c) in the extended position.

3. A table saw (1, 1c) as claimed in claim 1 wherein the auxiliary support device (9, 300) is a framework which comprises a first rod (91, 301), a second rod (93, 303) and a third rod (92, 302) connected between the first rod and the second rod.

4. A table saw (1, 1c) as claimed in any preceding claim, wherein the auxiliary support device (9, 300) has a support length L2 which is larger than the height H between the work surface (31, 31c) and bottom of the base (2).

5. A table saw (1, 1c) as claimed in claim 4 wherein the worktable (3, 3 c) has a support length L 1 greater than the support length L2 of the auxiliary support device (9, 300).

6. A table saw (1, 1c) as claimed in any preceding claim further comprising a pair of brackets (314, 314') disposed on opposite edges of the worktable (3, 3c), wherein each bracket has a support surface (314a, 314a') for supporting the auxiliary support device (9, 300).

7. A table saw (1, 1c) as claimed in any preceding claim further comprising a detachable support plate (13, 323) with a support surface which is disposed on the auxiliary support device (9, 300), wherein the support surface of the support plate is substantially co-planar with the work surface (31, 31c) of the worktable (3, 3c).

8. A table saw (1, 1c) as claimed in claim 1, wherein the worktable (3) has a stationary support (8) equipped with a pair of guide rails (14, 14') and the auxiliary support device (9) is equipped with a pair of guide rods (91, 93), wherein the scale system (20) has a dual scale (201, 202) disposed on one of the guide rails and series scale values disposed on one of the guide rods, wherein the dual scale is aligned with the series scale values.

9. A table saw (1, 1c) as claimed in claim 8 further comprising a movable rip fence (11) selectively mounted on the stationary support (8) or the auxiliary support (9) and a scale indication pointer (111) disposed on the rip fence.

10. A table saw (1, 1c) as claimed in claim 8 or 9 further comprising a safety device (12) mounted between the stationary support (8) and the auxiliary support (9).

11. A table saw (1, 1c) as claimed in claim 1, wherein the auxiliary support device (300) is equipped with a pair of guide rods (301, 302) and a third rod (303) which define a first support surface and a second support surface respectively, wherein the first support surface and the second support surface can be converted to work in accordance with the extended position and folded position of the auxiliary support device.

12. A table saw (1, 1c) as claimed in claim 11, wherein the first support surface and the second surface are each provided with a scale system (M1, M2), wherein at least one scale system is provided with series scale values.

13. A table saw (1, 1c) as claimed in claim 12, wherein the first support surface is the upper surface of the auxiliary support device (300) and the second support surface is the bottom surface of the auxiliary support device, wherein when the auxiliary support device is in the extended position, the first support surface is adjacent the work surface (31c) and when the auxiliary support device is in the folded position, the second surface is adjacent to the work surface.

14. A table saw (1, 1c) as claimed in claim 13, wherein the first support surface and the second support surface are lower than the work surface (31c).

15. A table saw (1, 1c) as claimed in claim 14 further comprising at least one locking device (315) mounted operatively between the guide rods (301, 302) and worktable (3c) for locking the auxiliary support device (300) relative to the worktable.

## Patentansprüche

1. Tischsäge (1, 1c) umfassend:
einen stationären Arbeitstisch (3, 3c) mit einer Arbeitsfläche (31, 31c);
eine Basis (2) zum Stützen des Arbeitstisches;
eine zwischen dem Arbeitstisch und der Basis so montierte motorgetriebene Schneidvorrichtung (4), dass sie in Betrieb aus der Arbeitsfläche hervorragt; und
mindestens eine neben dem Arbeitstisch und schwenkbar relativ zu dem Arbeitstisch befestigte Hilfsstützvorrichtung (9, 300), wobei die Hilfsstützvorrichtung zwischen einer ausgefahrenen Position und einer zusammengeklappten Position veränderbar und beim Verändern von der ausgefahrenen Position in die zusammengeklappte Position nach oben schwenkbar ist, wobei die Trägerlänge der Hilfsstützvorrichtung die Trägerlänge des Arbeitstisches vergrößert, wenn die Hilfsstützvorrichtung in die ausgefahrene Position geschwenkt ist, und wobei die Hilfsstützvorrichtung in der zusammengeklappten Position eine obere Stützfläche definiert, die im Wesentlichen parallel zu der Arbeitsfläche ist, **dadurch gekennzeichnet, dass** die Tischsäge weiterhin umfasst:
ein Maßstabssystem (20) zum Messen der Schneidelänge eines Werkstücks, wobei das Maßstabssystem auf dem Arbeitstisch auf einer Seite der Schneidvorrichtung eine erste Messskala (201, M1) und eine zweite Messskala (202, M2) auf der Hilfsstützvorrichtung auf der anderen Seite der Schneidevorrichtung aufweist, wobei die zweite Messskala zum Messen eines auf der Hilfsstützvorrichtung getragenen Werkstücks sequentiell ist, wenn die Hilfsstützvorrichtung in einer ausgefahrenen Position ist.

2. Tischsäge nach Anspruch 1, wobei die Hilfsstützvorrichtung (9, 300) in der ausgefahrenen Position eine obere, im Wesentlichen zu der Arbeitsfläche (31, 31c) parallele Stützfläche definiert.

3. Tischsäge (1, 1c) nach Anspruch 1, wobei die Hilfsstützvorrichtung (9, 300) ein Rahmen ist, der eine erste Stange (91, 301), eine zweite Stange (93, 303) und eine dritte Stange (92, 302), die zwischen der ersten Stange und der zweiten Stange angeschlossen ist, umfasst.

4. Tischsäge (1, 1c) nach einem der vorhergehenden Ansprüche, wobei die Hilfsstützvorrichtung (9, 300) eine Trägerlänge L2 aufweist, die größer als die Höhe H zwischen der Arbeitsfläche (31, 31c) und der Unterseite der Basis (2) ist.

5. Tischsäge (1, 1c) nach Anspruch 4, wobei der Arbeitstisch (3, 3c) eine Trägerlänge L1 aufweist, die größer als die Trägerlänge L2 der Hilfsstützvorrichtung (9, 300) ist.

6. Tischsäge (1, 1c) nach einem der vorhergehenden Ansprüche, ferner umfassend ein Paar an gegenüberliegenden Kanten des Arbeitstisches (3, 3c) angeordnete Klammern (314, 314'), wobei jede Klammer eine Stützfläche (314a, 314a') zum Stützen der Hilfsstützvorrichtung (9, 300) aufweist.

7. Tischsäge (1, 1c) nach einem der vorhergehenden Ansprüche, ferner umfassend eine abnehmbare Stützplatte (13, 323) mit einer Stützfläche, die auf der Hilfsstützvorrichtung (9, 300) angebracht ist, wobei die Stützfläche der Stützplatte im Wesentlichen koplanar mit der Arbeitsfläche (31, 31c) des Arbeitstisches (3, 3c) ist.

8. Tischsäge (1, 1c) nach Anspruch 1, wobei der Arbeitstisch (3) einen stationären mit einem Paar Führungsschienen (14, 14') ausgestatteten Träger (8) aufweist und die Hilfsstützvorrichtung (9) mit einem Paar Führungsstangen (91, 93) ausgestattet ist, wobei das Maßstabssystem (20) eine auf einer der Führungsschienen angebrachte Doppelskala (201, 202) und auf einer der Führungsstangen aufgebrachte Serienskalenwerte aufweist, wobei die Doppelskala an den Serienskalenwerten ausgerichtet ist.

9. Tischsäge (1, 1c) nach Anspruch 8, ferner umfassend einen beweglichen, wahlweise an dem stationären Träger (8) oder der Hilfsstützvorrichtung (9) angeordneten Parallelanschlag (11) und einen auf dem Parallelanschlag angeordneten Zeiger (111) für die Anzeige der Skala.

10. Tischsäge (1, 1c) nach Anspruch 8 oder 9, ferner umfassend eine zwischen dem stationären Träger (8) und der Hilfsstützvorrichtung (9) angeordneten Sicherheitsvorrichtung (12).

11. Tischsäge (1, 1c) nach Anspruch 1, wobei die Hilfsstützvorrichtung (300) mit einem Paar Führungsstangen (301, 302) und einer dritten Stange (303) ausgestattet ist, die jeweils eine erste Stützfläche und eine zweite Stützfläche definieren, wobei die erste Stützfläche und die zweite Stützfläche so verändert werden können, dass sie in der ausgefahrenen Position und in der zusammengeklappten Position der Hilfsstützvorrichtung funktionieren.

12. Tischsäge (1, 1c) nach Anspruch 11, wobei sowohl die erste Stützfläche als auch die zweite Fläche mit einem Maßstabssystem (M1, M2) ausgestattet sind, wobei mindestens ein Maßstabssystem Serienskalenwerte aufweist.

13. Tischsäge (1, 1c) nach Anspruch 12, wobei die erste Stützfläche die obere Fläche der Hilfsstützvorrichtung (300) und die zweite Stützfläche die unter Fläche der Hilfsstützvorrichtung ist, wobei die erste Stützfläche benachbart zu der Arbeitsfläche (31c) ist, wenn die Hilfsstützvorrichtung in der ausgefahrenen Position ist, und die zweite Fläche benachbart zu der Arbeitsfläche ist, wenn die Hilfsstützvorrichtung in der eingeklappten Position ist.

14. Tischsäge (1, 1c) nach Anspruch 13, wobei die erste Stützfläche und die zweite Stützfläche niedriger als die Arbeitsfläche (31c) sind.

15. Tischsäge (1, 1c) nach Anspruch 14, ferner umfassend mindestens eine operativ zwischen den Führungsstangen (301, 302) und dem Arbeitstisch (3c) angebrachte Feststellvorrichtung (315) zum Feststellen der Hilfsstützvorrichtung (300) relativ zu dem Arbeitstisch.

## Revendications

1. Scie sur table (1, 1c) comprenant :
une table de travail fixe (3, 3c) comportant une surface de travail (31, 31c) ;
une base (2) pour supporter la table de travail ;
un dispositif de coupe entraîné par moteur (4) monté entre la table de travail et la base de manière à être saillant fonctionnellement depuis la surface de travail ; et
au moins un dispositif de support auxiliaire (9, 300), monté, de manière adjacente, pivotant par rapport à la table de travail, le dispositif de support auxiliaire étant transformable entre une position déployée et une position pliée et étant apte à pivoter vers le haut lorsqu'il est transformé de la position déployée à la position pliée, dans laquelle table, lorsque le dispositif de support auxiliaire est pivoté jusqu'à la position déployée, la longueur de support du dispositif de support auxiliaire ajoute à la longueur de support de la table de travail et le dispositif de support auxiliaire définit une surface de support supérieure sensiblement parallèle à la surface de travail dans la position pliée, **caractérisée en ce que** la scie sur table comprend, en outre :
un système de graduation (20) pour mesurer la longueur de coupe d'une pièce, le système de graduation comportant une première échelle de mesure (201, M1) située sur la table de travail sur un côté du dispositif de coupe et une deuxième échelle de mesure (202, M2) située sur le dispositif de support auxiliaire sur l'autre côté du dispositif de coupe, où, lorsque le dispositif de support auxiliaire se trouve dans la position déployée, la deuxième échelle de mesure est séquentielle pour mesurer une pièce supportée sur le dispositif de support auxiliaire.

2. Scie sur table selon la revendication 1, dans laquelle le dispositif de support auxiliaire (9, 300) définit une surface de support supérieure sensiblement parallèle à la surface de travail (31, 31c) dans la position déployée.

3. Scie sur table (1, 1c) selon la revendication 1, dans laquelle le dispositif de support auxiliaire (9, 300) est un châssis qui comprend une première barre (91, 301), une deuxième barre (93, 303) et une troisième barre (92, 302) reliée entre la première barre et la deuxième barre.

4. Scie sur table (1, 1c) selon l'une quelconque des revendications précédentes, dans laquelle le dispositif de support auxiliaire (9, 300) a une longueur de support L2 qui est supérieure à la hauteur H entre la surface de travail (31, 31c) et la surface inférieure de la base (2).

5. Scie sur table (1, 1c) selon la revendication 4, dans laquelle la table de travail (3, 3c) a une longueur de support L1 supérieure à la longueur de support L2 du dispositif de support auxiliaire (9, 300).

6. Scie sur table (1, 1c) selon l'une quelconque des revendications précédentes, comprenant, en outre, une paire de consoles (314, 314') disposées sur des bords opposés de la table de travail (3, 3c), chaque console comportant une surface de support (314a, 314a') pour supporter le dispositif de support auxiliaire (9, 300).

7. Scie sur table (1, 1c) selon l'une quelconque des revendications précédentes, comprenant, en outre, une plaque de support détachable (13, 123) pourvue d'une surface de support qui est disposée sur le dispositif de support auxiliaire (9, 300), la surface de support de la plaque de support étant sensiblement coplanaire à la surface de travail (31, 31c) de la table de travail (3, 3c).

8. Scie sur table (1, 1c) selon la revendication 1, dans laquelle la table de travail (3) comporte un support fixe (8) équipé d'une paire de rails de guidage (14, 14') et le dispositif de support auxiliaire (9) est équipé d'une paire de barres de guidage (91, 93), le système de graduation (20) comportant une double graduation (201, 202) disposée sur l'un des rails de guidage et des graduations en série disposées sur l'une des barres de guidage, la double graduation étant alignée avec les graduations en série.

9. Scie sur table (1, 1c) selon la revendication 8, comprenant, en outre, un guide à refendre mobile (11) monté sélectivement sur le support fixe (8) ou le dispositif de support auxiliaire (9) et un indicateur de graduation (111) disposé sur le guide à refendre.

10. Scie sur table (1, 1c) selon la revendication 8 ou 9, comprenant, en outre, un dispositif de sécurité (12) monté entre le support fixe (8) et le dispositif de support auxiliaire (9).

11. Scie sur table (1, 1c) selon la revendication 1, dans laquelle le dispositif de support auxiliaire (300) est équipé d'une paire de barres de guidage (301, 302) et d'une troisième barre (303) qui définissent une première surface de support et une deuxième surface de support, respectivement, la première surface de support et la deuxième surface de support pouvant être transformées en surface de travail en fonction de la position déployée et la position pliée du dispositif de support auxiliaire.

12. Scie sur table (1, 1c) selon la revendication 11, dans laquelle la première surface de support et la deuxième surface de support sont chacune pourvues d'un système de graduation (M1, M2), au moins un système de graduation étant pourvu de graduations en série.

13. Scie sur table (1, 1c) selon la revendication 12, dans laquelle la première surface de support est la surface supérieure du dispositif de support auxiliaire (300) et la deuxième surface de support est la surface inférieure du dispositif de support auxiliaire, où, lorsque le dispositif de support auxiliaire se trouve dans la position déployée, la première surface de support est adjacente à la surface de travail (31c) et lorsque le dispositif de support auxiliaire se trouve dans la position pliée, la deuxième surface est adjacente à la surface de travail.

14. Scie sur table (1, 1c) selon la revendication 13, dans laquelle la première surface de support et la deuxième surface de support sont plus basses que la surface de travail (31c).

15. Scie sur table (1, lc) selon la revendication 14, comprenant, en outre, un dispositif de verrouillage (315) monté fonctionnellement entre les barres de guidage (301, 302) et la table de travail (3c) pour verrouiller le dispositif de support auxiliaire (300) par rapport à la table de travail.
